# EUROPÄISCHE PATENTSCHRIFT

(11) **EP 0 693 476 B1**
(45) Veröffentlichungstag und Bekanntmachung des Hinweises auf die Patenterteilung: **29.10.1997**
(21) Anmeldenummer: 95107321.2
(22) Anmeldetag: 15.05.1995
(51) Int. Cl.: C07C 311/09, C08G 59/46, C08L 63/00, C04B 41/48, C14C 9/00, D06M 15/55, D21H 17/52, B01F 17/52

(54) **Perfluoralkylgruppen enthaltende Harze und deren Verwendung**
Resins containing perfluoroalkyl groups and their use
Résines contenant des groupes perfluoroalkyles et leur utilisation

(30) Priorität: 26.05.1994 DE 4418309
(43) Veröffentlichungstag der Anmeldung: 24.01.1996
(73) Patentinhaber: BAYER AG, 51368 Leverkusen (DE)
(72) Erfinder: Kirchmeyer, Stephan, Dr., D-51375 Leverkusen (DE); Pohmer, Klaus, Dr., D-51061 Köln (DE)

(56) Entgegenhaltungen:
- EP-A- 0 125 826
- EP-A- 0 311 894
- EP-A- 0 552 630
- DE-A- 1 620 965
- FR-A- 2 194 739
- US-A- 3 297 519
- DATABASE WPI Week 8510, Derwent Publications Ltd., London, GB; AN 85-059894 & JP-A-60 017 197 (TOYO SHIGYO KK) 29. Januar 1985

## Beschreibung

Die vorliegende Erfindung betrifft Perfluoralkylgruppen enthaltende, wasserlösliche, -emulgierbare oder -dispergierbare Harze und ihre Verwendung als Behandlungs-, Schutz- und Imprägniermittel für Gesteinsmaterialien, textile Materialien und Papier sowie als Emulgier-, Netz- und Hilfsmittel zur Herstellung wäßriger Perfluoralkylverbindungen enthaltender Zubereitungen.

Verbindungen mit Perfluoralkylgruppen weisen aufgrund ihrer Oberflächenspannung ausgeprägte Effekte bezüglich Wasser- und Schmutzabweisung auf. Hydrophil modifizierte Perfluoralkylverbindungen zeigen zudem eine hohe Oberflächenaktivität. Bezüglich ihrer wasser- und schmutzabweisenden Eigenschaften bieten polymere Verbindungen oder Harze aufgrund ihrer Filmbildungseigenschaften Vorteile. Bevorzugte Applikationform für Perfluoralkylgruppen tragende Verbindungen, Polymere oder Harze sind lösemittelfreie, wäßrige Lösungen, Dispersionen oder Emulsionen.

Die Herstellung von Perfluoralkylgruppen bzw. Perfluorpolyether aufweisenden wäßrigen Polyurethanpolymeren durch Umsetzung von hydroxyfunktionellen Perfluoralkyl-Bausteinen, Isocyanaten und ionischen bzw. nichtionischen Bausteinen und der Aufbau von Perfluoralkylgruppen aufweisenden Polymeren auf Acrylat-Basis, welche entweder als wäßrige Dispersionen erzeugt werden oder leicht in wäßrige Dispersionen umzuwandeln sind, ist aus einer ganzen Reihe von Druckschriften bekannt (z.B. EP-A 491248, EP-A 533159, EP-A 552630, EP-A 572269, EP-A 560161, US 5039739). Die in diesen Schriften beschriebenen, Perfluoralkylketten tragenden Bausteine, welche zum Aufbau der Polymeren bzw. Harze verwendet werden, tragen Hydroxyl- bzw. Aminofunktionen, welche mit Isocyanaten reagieren können, bzw. ungesättigte Gruppen, welche radikalisch bzw. durch ionische Initiierung zu Polymeren umgesetzt werden können.

Zur Herstellung der oben genannten Polymeren oder Harze unter Verwendung der Polyurethan- bzw. der Polyacrylatchemie können die im technischen Maßstab zugänglichen Perfluoralkylsulfonamide bzw. N-Alkylperfluoralkylsulfonamide nicht verwendet werden, da sie die entsprechend benötigten Funktionalitäten nicht aufweisen, d.h. sie lassen sich weder mit Isocyanatgruppen noch radikalisch oder ionisch initiiert zu Polymeren oder Harzen umsetzen. Perfluoralkylsulfonamide bzw. N-Alkylperfluoralkylsulfonamide werden durch Elektrofluorierung von Alkylsulfonsäuren hergestellt, wobei primär Perfluoralkylsulfonylfluoride erhalten werden, welche mit Ammoniak oder Alkylaminen zu den entsprechenden Perfluoralkylsulfonamiden bzw. N-Alkylperfluoralkylsulfonamiden als primär verfügbare Perfluoralkylbausteine umgesetzt werden. Die so hergestellten Perfluoralkylsulfonamide bzw. N-Alkylperfluorsulfonylsulfonamide müssen daher über weitere Derivatisierungreaktionen z.B. in die entsprechenden hydroxyl- oder aminofunktionellen Verbindungen bzw. in Verbindungen, die ungesättigte Gruppen enthalten, umgewandelt werden.

Es wäre jedoch insbesondere aus Kostengründen wünschenswert, Perfluoralkylsulfonamide bzw. N-Alkylperfluoralkylsulfonamide direkt zu Perfluoralkylgruppen tragenden Verbindungen, Polymeren bzw. Harzen umzusetzen, ohne weitere Derivatisierungen an den teuren Fluorbausteinen vornehmen zu müssen. Insbesondere wäre es von hohem technischen Vorteil, wenn aus diesen Bausteinen direkt Polymere oder Harze herstellbar wären, welche wasserlösliche, -dispergierbare bzw. -emulgierbare Eigenschaften aufweisen.

Aufgabe der Erfindung war es daher, wasserlösliche, dispergierbare bzw. -emulgierbare Verbindungen zur Verfügung zu stellen, die einfach und kostengünstig herstellbar sind und die die geforderten Eigenschaften, wie Wasser-und Schmutzabstoßung, aufweisen.

Es wurde nun überraschenderweise gefunden, daß durch direkte Umsetzung von Perfluoralkylgruppen aufweisenden Sulfonamiden mit 1,2-Epoxidgruppen aufweisenden Verbindungen unter milden Bedingungen harz- bzw. polymerartige Umsetzungsprodukte herstellbar sind. Zudem wurde gefunden, daß bei zusätzlicher Verwendung von Oxyethylen-Einheiten enthaltenden Verbindungen wasserlösliche, -dispergierbare oder -emulgierbare Harze erhalten werden können, welche sich als Ausrüstungs- und Beschichtungsmittel für Textilen, Leder, Papier und Gesteinsmaterialien eignen.

Diese Harze eigenen sich zudem als Emulgatoren für Perfluoralkylalkoxysilane. Dies ist um so überraschender, da bislang Perfluoralkoxysilane weder durch herkömmliche Emulgatoren, noch durch bekannte fluorhaltige Tenside emulgiert werden konnten.

Gegenstand der Erfindung sind Perfluoralkylgruppen enthaltende, wasserlösliche oder in Wasser emulgierbare oder dispergierbare Harze, die herstellbar sind aus
a) einem oder mehreren Perfluoralkylgruppen aufweisenden Sulfonamiden der allgemeinen Formel (I) 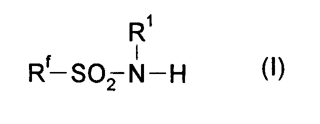 wobei
   - R^{f}: eine monovalente Perfluoralkylgruppe mit 4 bis 20 Kohlenstoffatomen und
   - R¹: Wasserstoff oder eine monovalente, gegebenenfalls durch 1 bis 4 Sauerstoffatome unterbrochene Kohlenwasserstoffkette mit 1 bis 20 Kohlenstoffatomen bedeuten,
b) einer Komponente, welche Oxyethylen-Einheiten enthält und gegenüber 1,2-Epoxiden reaktive Gruppen aufweist,
c) einer Komponente, welche 1,2-Epoxidgruppen enthält und
d) gegebenenfalls weiteren Komponenten, die gegenüber 1,2-Epoxiden reaktive Gruppen aufweisen,
   mit der Maßgabe, daß die Menge der im Harz vorhandenen Oxyethyleneinheiten 5 bis 95 Gew.-% des gesamten Harzes beträgt.

Besonders bevorzugt sind Perfluoralkylgruppen enthaltende, wasserlösliche, - emulgierbare oder -dispergierbare Harze, die 5 bis 95 Gew.-% Oxyethyleneinheiten, berechnet mit einem Äquivalentgewicht von 44 g/Mol Oxyethyleneinheit, 1,5 bis 60 Gew.-% Fluor und gegebenenfalls bis zu 200 Milliäquivalenten/100 g Harz an ionischen Gruppen enthalten.

Perfluoralkylgruppen enthaltende, wasserlösliche, -emulgierbare oder - dispergierbare Harze, in denen das Äquivalentverhältnis der Epoxidgruppen der 1,2-Epoxidgruppen enthaltenden Komponente zu den gegenüber Epoxid reaktiven Gruppen der anderen Komponenten zwischen 1 zu 5 bis 5 zu 1 beträgt, sind besonders bevorzugt.

Bevorzugt sind auch Perfluoralkylgruppen enthaltende, wasserlösliche, - emulgierbare oder -dispergierbare Harze, die dadurch gekennzeichnet sind, daß als Komponente b) ein säuregruppenhaltiger, polyoxyalkylenmodifizierter, Oxyethyleneinheiten aufweisender Polyester verwendet wird.

Die Perfluoralkylgruppen enthaltenden, wasserlöslichen, -emulgierbaren oder - dispergierbaren Harze werden vorzugsweise als Behandlungs-, Schutz- und Imprägniermittel für Gesteinsmaterialien, textile Materialien, Leder und Papier sowie als Emulgier-, Netz- und Hilfsmittel zur Herstellung wäßriger Perfluoralkylverbindungen enthaltender Zubereitungen verwendet.

Beim Rest R^{f} der Sulfonamide gemäß Formel (I) handelt es sich um eine monovalente Perfluoralkylgruppe mit 4 bis 20 Kohlenstoffatomen, z.B. geradkettige oder verzweigte Perfluorbutan-, Perfluorpentan-, Perfluorhexan-, Perfluorheptan-, Perfluoroctan-, Perfluornonan-, Perfluordecan- oder Perfluordodecangruppen, bervorzugt Perfluorbutan- und Perfluoroctangruppen. Bei der Gruppe R¹ handelt es sich um Wasserstoff oder eine monovalente organische Gruppierung, vorzugsweise um eine monovalente, aliphatische, gegebenenfalls durch 1 bis 4 Sauerstoffatome unterbrochene Gruppe mit 1 bis 20 Kohlenstoffatomen, z.B. Methyl-, Ethyl-, Propyl-, Butyl- oder 1-Methylethylgruppen, vorzugsweise um Methyl- oder Ethylgruppen.

Geeignete Verbindungen der allgemeinen Formel (I) sind beispielsweise N-Methyl-1-perfluorbutansulfonamid, N-Ethyl-1-perfluorbutansulfonamid, N-Propyl-1-perfluorbutansulfonamid, N-Methyl-1-perfluorpentansulfonamid, N-Ethyl-1-perfluorpentansulfonamid, N-Methyl-1-perfluorhexansulfonamid, N-Ethyl-1-perfluorhexansulfonamid, N-Propyl-1-perfluorhexansulfonamid, N-Methyl-1-perfluorheptansulfonamid, N-Ethyl-1-perfluorheptansulfonamid, N-Butyl-1-perfluorheptansulfonamid, N-Methyl-1-perfluoroctansulfonamid, N-Ethyl-1-perfluoroctansulfonamid, N-1-Methylethyl-1-perfluoroctansulfonamid, N-Butyl-1-perfluoroctansulfonamid, N-Ethyl-1-perfluornonansulfonamid, N-Propyl-1-perfluordecansulfonamid, N-Propyl-1-perfluordodecansulfonamid Perfluorbutansulfonamid, Perfluorhexansulfonamid und Perfluoroctansulfonamid.

Komponente b) enthält mindestens eine mono-, di- und/oder polyfunktionelle Verbindung, welche Oxyethyleneinheiten (-CH₂-CH₂-O-) berechnet mit einem Äquivalentgewicht von 44 g/Mol Oxyethyleneinheit, enthält, und weist gegenüber 1,2-Epoxiden reaktive Gruppen auf. Solche Funktionalitäten sind beispielsweise Carbonsäure- oder Amino- und weniger bevorzugt Thiol- oder Hydroxylfunktionen. Insbesondere Hydroxylfunktionen reagieren mit 1,2-Epoxiden nur unter drastischen Bedingungen, d.h. unter Katalyse starker Basen und/oder hohen Temperaturen. Bevorzugt ist auch, Hydroxylfunktionen in Carboxylfunktionen zu überführen, welches durch Umsetzung der Hydroxylfunktionen mit Dicarbonsäuren oder deren reaktionsfähigen Derivaten wie z.B. Estern oder Anhydriden leicht möglich ist. Dadurch werden carboxyfunktionelle Verbindungen erhalten, welche leicht mit 1,2-Epoxidgruppen reagieren.

Als hydroxyfunktionelle Verbindungen werden z.B. mindestens eine, vorzugsweise zwei bis drei Hydroxylgruppen aufweisende Polyether der an sich bekannten Art verwendet. Diese werden durch Polymerisation von Epoxiden wie Ethylenoxid und zusätzlich Propylenoxid, Butylenoxid oder weiteren 1,2-Epoxiden, z.B. in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Butanol, Ethoxybutanol, Wasser, Alkohole, Ammoniak oder Amine, z.B. Ethylenglykol, Propylenglykol-(1,3) oder -(1,2), Glycerin, Sorbit, 2,2-Bis(4-hydroxyphenyl)propan, Anilin, Ethanolamin oder Ethylendiamin hergestellt.

Zur Überführung der Hydroxylfunktionen in Carbonsäurefunktionen z.B. durch Veresterung der beschriebenen Polyether werden diese mit Dicarbonsäuren oder deren veresterungsfähigen Derivaten gegebenenfalls im Gemisch mit weiteren Mono-, Di- oder Polyalkoholen sowie gegebenenfalls Monocarbonsäuren in an sich bekannter Weise (vgl. z.B. Houben-Weyl, Methoden der Organischen Chemie, Stuttgart, 1963, Bd. 14/2, S. 1 -5, 21 - 23, 40 - 44; C. Martens, Alkyd-Resins, Reinhold Publ. Comp. 1961, Reinhold Plastics Appl. Ser., S. 51 - 59) so umgesetzt, daß ein Überschuß an unveresterten Säuregruppen verbleibt. Die Veresterung wird vorzugsweise bis auf Säurezahlen von 5 bis 200, besonders bevorzugt von 30 bis 100 mg KOH/g Substanz durchgeführt. Bevorzugt handelt es sich also um säuregruppenhaltige Oxyethyleneinheiten aufweisende Polyester. Weitere Alkohole sind z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Diethylenglykol, Triethylenglykol, Tetraethylenglykol und höhere Polyethylenglykole, Dipropylenglykol und höhere Polypropylenglykole sowie Dibutylenglykol und höhere Polybutylenglykole. Als Beispiele für Dicarbonsäuren und deren Derivate seien genannt: Bernsteinsäure, Adipinsäure, Korksäure, Azelainsäure, Sebacinsäure, Phthalsäure, Isophthalsäure, Trimellisäure, Phthalsäureanhydrid, Tetrahydrophthalsäureanhydrid, Hexahydro-phthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Auch durch Vinylpolymerisation funktionalisierte Oxyethylengruppen enthaltende Verbindungen, z.B. mit Acrylsäure, Methacrylsäure, Maleinsäure, Fumarsäure, Ithaconsäure gepfropfte oxyethylengruppenhaltige Verbindungen der vorgenannten Art sind als Komponente b) geeignet. Ebenso sind Derivate zur Pfropfung geeignet, die anschließend in die Carbonsäuren umgewandelt werden können, wie z.B. Acrylsäureester, Methacrylsäureester oder Maleinsäureanhydrid.

Verwendet werden können ebenfalls aminoterminierte Polyether, welche Oxyethylengruppen enthalten, beispielsweise solche, die durch reduktive Aminierung der vorbeschriebenen oxyethylengruppenhaltigen Polyether erhältlich sind.

Wichtig ist, daß die Verbindungen der Komponente b) Funktionalitäten aufweisen, die mit 1,2-Epoxiden reagieren können und daß die Oxyethylen-Einheiten in einer Menge vorhanden sind, so daß das Harz einen Anteil von 5 bis 95 Gew.-% an Oxyethylen-Einheiten, bevorzugt von 8 bis 25 Gew.% an Oxyethylen-Einheiten aufweist.

Die Grundkörper der in der 1,2-Epoxidgruppen aufweisenden Komponente c) enthaltenden Verbindungen haben 1 bis 45 C-Atome und stellen epoxidierbare Di-oder Polyphenole, Di- oder Polycarbonsäuren, Di- oder Polycarbonsäureanhydride, Di- oder Polyalkohole oder mindestens zweifach ungesättigte Verbindungen dar.

Es sind dies beispielsweise Diglycidylether zweiwertiger Phenole wie Brenzkatechin, Resorcin, Hydrochinon, 2,2-Bis-(4-hydroxyphenyl)propan, 2,2-Bis(4-hydroxy-3-methyl)propan, 4,4'-Dihydroxydiphenylsulfon, Glycidylester zweiwertiger aromatischer, aliphatischer und cycloaliphatischer Carbonsäuren wie beispielsweise Phthalsäureanhydridbisglycidylether oder Adipinsäurebisglycidylether oder Glycidylether zweiwertiger aliphatischer Alkohole wie Butandiolbisglycidylether, Hexandiolbisglycidylether oder Polyoxyalkylenglykolbisglycidylether.

Beispiele von Verbindungen mit mehr als zwei Epoxidgruppen sind: Polyglycidylether polywertiger Phenole, beispielsweise von Novolaken (Umsetzungsprodukte von ein oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan; Epoxid-Verbindungen auf der Basis von aromatischen Aminen und Epichlorhydrin, beispielsweise Tetraglycidylmethylendianilin, N-Diepoxypropyl-4-aminophenylglycidylether; Glycidylester mehrwertiger aromatischer, aliphatischer und cycloaliphatischer Carbonsäuren; Glycidylether mehrwertiger Alkohole, beispielsweise von Glycerin, Trimethylolpropan und Petaerythrit und weitere Glycidylverbindungen wie Trisglycidylisocyanurat.

Bevorzugt sind Glycidylether von zweiwertigen oder mehrwertigen Phenolen; besonders bevorzugt sind die Bisgylcidylether von 2,2(4,4'-Dihydroxyphenyl)propan und Polygylcidylether von Novolaken.

Als Verbindungen der Komponente d) kommen Verbindungen in Betracht, welche gegenüber 1,2-Epoxiden reaktive Gruppen aufweisen, also vorwiegend Verbindungen mit Carbonsäure- und Aminogruppen, weniger bevorzugt Thiol- und Hydroxylgruppen. Hydroxylgruppen können jedoch auf die beschriebene Art und Weise in Carbonsäuregruppen überführt werden. Die Verbindungen der Komponente d) weisen bevorzugt mindestens eine primäre Aminogruppe, eine sekundäre Aminogruppe, eine Hydroxylgruppe oder eine Carbonsäuregruppe auf. Zudem können diese Komponenten anionische Gruppen wie neutralisierte Carboxylat-, Sulfonat- oder Phosphonatgruppen oder kationische Gruppen wie z.B. Ammoniumgruppen aufweisen, welche die Löslichkeit, Emulgierbarkeit oder Dispergierbarkeit der erfindungsgemäßen Harze in Wasser verbessern können. Geeignete Verbindungen sind z.B. mit Alkali oder organischen Basen neutralisierte Hydroxyethylsulfonsäure, Dimethylolpropionsäure, Weinsäure, Glycin, Taurin und Methyltaurin oder Amine wie N,N-Dimethyl-N(3-aminopropyl)amin und Bis(N,N-dimethylaminopropyl)amin.

Weiterhin sind als Verbindungen der Komponente d) geeignet z.B. Dicarbonsäuren wie Bernsteinsäure, Adipinsäure, Korksäure, Azelainsäure, Sebacinsäure, Phthalsäure, Tetrahydrophthalsäure oder Hexahydrophthalsäure, Fettsäuren wie Kokosfettsäure, Laurinsäure, Mystinsäure, Palmitinsäure, Stearinsäure, Ölsäure, Linolsäure, Tallölfettsäuren, dimere oder trimere Fettsäuren und Fettamine wie Dodecylamin, Tetradecylamin, Hexadecylamin, Octadecylamin, N-Methyloctadecylamin.

Dem erfindungsgemäßen Harz können zudem Hilfsmittel zugesetzt werden, welche der Koagulation der in Dispersion vorliegenden Polymerteilchen entgegenwirken und dadurch die Stabilität der Dispersion erhöhen können. Bei den Hilfsmitteln handelt es sich im allgemeinen um sogenannte externe Emulgatoren, also um anionische, kationische oder neutrale niedermolekulare, oligomere oder polymere Emulgatoren, Tenside oder Schutzkolloide, die in einer Menge von 0 bis 10 Gew.%, vorzugsweise 0 bis 5 Gew.% bezogen auf die Masse des erfindungsgemäßen Harzes enthalten sein können. Besonders bevorzugt sind jedoch Harze, die keine externen Emulgatoren enthalten.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, chlorosulfonierte und verseifte Parffinöle, Alkylethersulfonate wie Ether von α-Sulfo-ω-hydroxy-polyethylenglykolen mit z.B. Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren bzw. polymeren Emulgatoren oder Tensiden sind die Salze von langkettige Alkanreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättige oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und gegebenenfalls propoxylierter Butyldiglkykol oder ethoxylierte Alkylarylether wie ethoxyliertes geradkettiges und/oder verzweigtes Nonylphenol oder Octylphenol oder benzyliertes p-Hydroxybiphenyl.

Geeignet als Emulgatoren oder Tenside sind weiterhin ethoxylierte langkettige Alkyl- oder Alkenylamine, Lecithin, mit langkettigen Alkylisocycanten modifizierte Umsetzungsprodukte aus Polyethylenglykolen und Diisocyanaten, Umsetungsprodukte von Rapsöl und Diethanolamin oder ethoxylierte Umsetzungsprodukte aus Sorbitan und langkettigen Alkan- oder Alkencarbonsäuren.

Geeignet als Schutzkolloide sind z.B. Polyvinylalkohole oder wasserlösliche Cellulosederivate wie Methylcellulose.

Das erfindungsgemäße Perfluoralkylgruppen enthaltende, wasserlösliche oder in Wasser emulgierbare oder dispergierbare Harz enthält 5 bis 95 Gew.-% Oxyethyleneinheiten, berechnet mit einem Äquivalentgewicht von 44 g/Mol Oxyethyleneinheit, 1,5 bis 60 Gew.-% Fluor und gegebenenfalls bis zu 200 Milliäquivalenten/100 g Harz an ionischen Gruppen. Das Äquivalentverhältnis der Epoxidgruppen aus Komponente c) zu den gegenüber Epoxid reaktiven Gruppen aus den Komponenten a), b) und d) beträgt zwischen 1 zu 5 bis 5 zu 1, vorzugsweise 1 zu 2 bis 2 zu 1.

Die Herstellung der erfindungsgemäßen Harze aus den Komponenten a) bis d) geschieht vorzugsweise dadurch, daß die Komponente c), welche 1,2-Epoxidgruppen enthält mit den Komponenten a), b) und d) gemeinsam oder nacheinander in einer Stufenreaktion bei Temperaturen zwischen 60 und 200°C, vorzugsweise bei Temperaturen von 80 bis 150°C umgesetzt wird. Die Reihenfolge der Umsetzungsschritte ist dabei unerheblich. Die Reaktion wird bevorzugt ohne Zusatz von Lösungsmitteln durchgeführt, jedoch ist es auch möglich, inerte Lösungsmittel wie Dimethylformamid, N-Methylpyrrolidon, Dimethylacetamid, Aceton, 2-Butanon, Tetrahydrofuran, Methyl-tert.butylether, Toluol, Choroform oder Dichlormethan während der Reaktion zuzusetzten. Diese Lösungsmittel können im Harz verbleiben oder gegebenenfalls nach der Beendigung der Herstellung durch geignete Verfahren, beispielsweise durch Destillation entfernt werden. Es ist auch möglich, während der Reaktion die Reaktionsgeschwindigkeit steigernde Agentien wie z.B. quartäre Ammoniumsalze wie Tetraetylamminiumchlorid und Trimethylbenzylammoniumchlorid, basische Alkaliverbindungen wie Natriumhydroxid, Kaliumhydroxid, Kaliumcarbonat und Natriumcarbonat oder tertiäre Amine wie Triethylamin, Dimethylbenzylamin, Dimethylcyclohexylamin oder Bis(N,N-dimethylaminopropyl)formamid zuzusetzen. Das Arbeiten unter Normaldruck ist bevorzugt, gegebenenfalls kann auch unter erhöhtem Druck gearbeitet werden. Im übrigen erfordert das Verfahren keine verfahrenstechnischen Besonderheiten. Das gleiche gilt für die Aufarbeitung.

Die erfindungsgemäßen Perfluoralkylgruppen enthaltenden, wasserlöslichen oder in Wasser emulgierbaren oder dispergierbaren Harze können als Behandlungs-, Schutz- und Imprägniermittel für Gesteinsmaterialien, wie Mauerwerk, Beton, Kalksandstein, Putz, Mörtel, Marmor, Keramik, Ziegel und Natursteine, z.B. als Hydrophobierungs- oder Oleophobierungsmittel, zur Sanierung oder als Antigraffiti-Ausrüstung, als Behandlungsmittel für textile Materialien, Leder und Papier, z.B. zur Regenfestausrüstung oder Schmutzfestausrüstung von Kleidung, Tischwäsche und Markiesen, zur Pflege und schmutzabweisenden Ausrüstung von Teppichen, Teppichböden und textilen Fußbodenbelägen, zur Ausrüstung und Pflege von Ledergegenständen wie Schuhen, Handschuhen und Lederbekleidung sowie als Emulgier-, Netz- und Hilfsmittel zur Herstellung wäßriger Zubereitungen z.B. als Emulgatoren, Verlaufshilfsmittel und Verdicker verwendet werden.

Die vorliegende Erfindung soll anhand der nachfolgenden Ausführungsbeispiele näher erläutert werden.

### Beispiel 1

50 g eines Polyethylenglykols mit einem mittleren Molekulargewicht von 2000 g/Mol werden in einem Dreihalskolben mit Innenthermometer und mechanischer Rührung 2 Stunden bei 120°C unter einem Vakuum von 16 Torr entwässert. Man gibt 5 g Bernsteinsäureanhydrid hinzu und rührt bei einer Temperatur von 100°C bis zu einer Säurezahl von 51 mg KOH/g Substanz nach. Nach Zusatz von 68,25 g eines Novolakpolyglycidylethers (Rütapox® 0300 der Firma Bakelite, Duisburg) und 0,05 g Natriumcarbonat wird nachgerührt, bis keine Säurezahl mehr feststellbar ist. Man gibt 174,42 g N-Methylperfluoroctansulfonsäureamid hinzu und erhitzt weitere 24 Stunden auf 100°C. Das fertige Harz besitzt einen Gehalt an Oxyethyleneinheiten von 16,8 Gew.-% und einen Fluorgehalt von 36,9 Gew.-%.

### Beispiel 2

In einem Dreihalskolben mit Innenthermometer und mechanischer Rührung werden 200 g des Polyethylenglykols aus Beispiel 1 und 20 g Bernsteinsäureanhydrid gemäß Beispiel 1 zu einem Polyetherester mit einer Säurezahl von 53 mg KOH/g umgesetzt. In einem weiteren Dreihalskolben mit Innenthermometer und mechanischer Rührung werden 75 g des Polyetheresters, 53,41 g des Novolakpolyglycidylethers aus Beispiel 1 und 0,5 g Natriumcarbonat anschließend bei 100°C gerührt, bis keine Säurezahl mehr feststellbar ist. Man gibt 121,59 g N-Methylperfluoroctansulfonsäureamid hinzu und rührt 24 Stunden bei 120°C nach. Das fertige Harz besitzt einen Gehalt an Oxyethyleneinheiten von 27,2 Gew.-% und einen Fluorgehalt von 30,6 Gew.-%.

### Beispiel 3

In einem Dreihalskolben mit Innenthermometer und mechanischer Rührung werden 75 g des Polyetheresters aus Beispiel 2, 9,59 g Ölsäure, 68,25 g des Novolakpolyglycidylethers aus Beispiel 1 und 0,5 g Natriumcarbonat anschließend bei 100°C gerührt, bis keine Säurezahl mehr feststellbar ist. Man gibt 156,98 g N-Methylperfluoroctansulfonsäureamid hinzu und rührt 24 Stunden bei 120°C nach. Das fertige Harz besitzt einen Gehalt an Oxyethyleneinheiten von 17,2 Gew.-% und einen Fluorgehalt von 34,0 Gew.-%.

### Beispiel 4

In einem Dreihalskolben mit Innenthermometer und mechanischer Rührung werden 55 g des Polyetheresters aus Beispiel 2, 24,75 g Ölsäure, 68,25 g des Novolakpolyglycidylethers aus Beispiel 1 und 0,5 g Natriumcarbonat anschließend bei 100°C gerührt, bis keine Säurezahl mehr feststellbar ist. Man gibt 129,53 g N-Methylperfluoroctansulfonsäureamid hinzu und rührt 24 Stunden bei 120°C nach. Das fertige Harz besitzt einen Gehalt an Oxyethyleneinheiten von 18,0 Gew.-% und einen Fluorgehalt von 29,3 Gew.-%.

### Beispiel 5

In einem Dreihalskolben mit Innenthermometer und mechanischer Rührung werden 55 g des Polyetheresters aus Beispiel 2, 57,99 g des Novolakpolyglycidylethers aus Beispiel 1 und 0,5 g Natriumcarbonat anschließend bei 100°C gerührt, bis keine Säurezahl mehr feststellbar ist. Man gibt 150,76 g N-Methylperfluoroctansulfonsäureamid hinzu und rührt 24 Stunden bei 120°C nach. Das fertige Harz besitzt einen Gehalt an Oxyethyleneinheiten von 15,0 Gew.-% und einen Fluorgehalt von 37,9 Gew.-%.

### Beispiel 6

In einem Dreihalskolben mit Innenthermometer und mechanischer Rührung werden 27,5 g des Polyetheresters aus Beispiel 2, 60,62 g des Novolakpolyglycidylethers aus Beispiel 1 und 0,31 g Natriumcarbonat anschließend bei 100°C gerührt, bis keine Säurezahl mehr feststellbar ist. Man gibt 161,88 g N-Methylperfluoroctansulfonsäureamid hinzu und rührt 24 Stunden bei 100°C nach. Das fertige Harz besitzt einen Gehalt an Oxyethyleneinheiten von 10,0 Gew.-% und einen Fluorgehalt von 40,7 Gew.-%.

### Beispiel 7

In einem Dreihalskolben mit Innenthermometer und mechanischer Rührung werden 13,75 g des Polyetheresters aus Beispiel 2, 61,72 g des Novolakpolyglycidylethers aus Beispiel 1 und 0,31 g Natriumcarbonat anschließend bei 100°C gerührt, bis keine Säurezahl mehr feststellbar ist. Man gibt 174,53 g N-Methylperfluoroctansulfonsäureamid hinzu und rührt 24 Stunden bei 100°C nach. Das fertige Harz besitzt einen Gehalt an Oxyethyleneinheiten von 5,0 Gew.-% und einen Fluorgehalt von 43,9 Gew.-%.

### Beispiel 8 (Dispersionen der erfindungsgemäßen Harze)

Die Harze der Beispiele 1 bis 7 werden jeweils in der doppelten Menge (bezogen auf Gewicht) Aceton gelöst. Anschließend werden die in der Tabelle angegebenen Mengen Wasser zugegeben und verrührt. Das Aceton wird anschließend bei 30°C bis zu einem Druck von 16 mbar abdestilliert. In allen Fällen werden stabile Dispersionen erhalten.

| Harz aus Beispiel | Wasser in g | pH | Viskosität in mPa·s | Stabilität | Feststoffgehalt |
|---|---|---|---|---|---|
| 1 | 695 | 3,1 | 210 | > 3 Monate | 30 % |
| 2 | 1000 | 6,5 | 31 | > 3 Monate | 20 % |
| 3 | 870 | 5,9 | 30 | > 3 Monate | 25 % |
| 4 | 760 | 6,9 | 35 | > 3 Monate | 25 % |
| 5 | 750 | 6,2 | 112 | > 3 Monate | 25 % |
| 6 | 750 | 6,0 | 45 | > 3 Monate | 25 % |
| 7 | 750 | 6,8 | 12 | > 1 Monat | 25 % |

### Beispiel 9 (Verwendung)

20 g der Dispersion des Harzes aus Beispiel 3 werden mit 480 g Wasser verdünnt. Baumwollstoff wird mit Hilfe der verdünnten Dispersion imprägniert und anschließend bei 25°C und 1 h bei 110°C im Trockenschrank getrocknet. Anschließend werden Tropfen von Wasser und Paraffin auf das Gewebe gesetzt. Die Tropfen bleiben auf dem Gewebe stehen, ohne das Gewebe zu benetzen. Im Vergleich dazu benetzen Wasser und Paraffin nichtimprägniertes Gewebe sofort und werden vom Gewebe aufgesogen.

## Patentansprüche

1. Perfluoralkylgruppen enthaltendes, wasserlösliches, -emulgierbares oder -dispergierbares Harz herstellbar aus
a) einem oder mehreren Perfluoralkylgruppen aufweisenden Sulfonamiden der allgemeinen Formel (I) 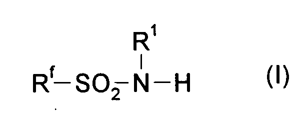 wobei
R^{f} eine monovalente Perfluoralkylgruppe mit 4 bis 20 Kohlenstoffatomen und
R¹ Wasserstoff oder eine monovalente gegebenenfalls durch 1 bis 4 Sauerstoffatome unterbrochene Kohlenwasserstoffkette mit 1 bis 20 Kohlenstoffatomen bedeuten,
b) einer Komponente, welche Oxyethylen-Einheiten enthält und gegenüber 1,2-Epoxiden reaktive Gruppen aufweist,
c) einer Komponente, welche 1,2-Epoxidgruppen enthält und
d) gegebenenfalls weiteren Komponenten, die gegenüber 1,2-Epoxiden reaktive Gruppen aufweisen,
mit der Maßgabe, daß die Menge der im Harz vorhandenen Oxyethyleneinheiten 5 bis 95 Gew.-% des gesamten Harzes beträgt.

2. Perfluoralkylgruppen enthaltendes, wasserlösliches, -emulgierbares oder -dispergierbares Harz gemäß Anspruch 1, dadurch gekennzeichnet, daß das Harz 5 bis 95 Gew.-% Oxyethyleneinheiten, 1,5 bis 60 Gew.-% Fluor und gegebenenfalls bis zu 200 Milliäquivalente/100 g Harz an ionischen Gruppen enthält.

3. Perfluoralkylgruppen enthaltendes, wasserlösliches -emulgierbares oder -dispergierbares Harz gemäß Anspruch 1 oder 2, dadurch gekennzeichnet, daß das Äquivalentverhältnis der Epoxidgruppen aus Komponente c) zu den gegenüber Epoxid reaktiven Gruppen aus den Komponenten a), b) und gegebenenfalls d) zwischen 1 zu 5 bis 5 zu 1 beträgt.

4. Perfluoralkylgruppen enthaltendes, wasserlösliches, -emulgierbares oder -dispergierbares Harz gemäß einem oder mehrerer der Ansprüche 1 bis 3 dadurch gekennzeichnet, daß als Komponente b) ein säuregruppenhaltiger, polyoxyalkylenmodifizierter, Oxyethyleneinheiten aufweisender Polyester verwendet wird.

5. Verwendung der perfluoralkylgruppen enthaltenden, wasserlöslichen, - emulgierbaren oder -dispergierbaren Harze gemäß Anspruch 1 bis 4 als Behandlungs-, Schutz- und Imprägniermittel für Gesteinsmaterialien, textile Materialien, Leder und Papier sowie als Emulgier-, Netz- und Hilfsmittel zur Herstellung wäßriger Perfluoralkylverbindungen enthaltender Zubereitungen.

## Claims

1. A resin which contains perfluoroalkyl groups and which is soluble, emulsifiable or dispersible in water, which can be prepared from
a) one or more sulphonamides containing perfluoroalkyl groups of general formula (I) 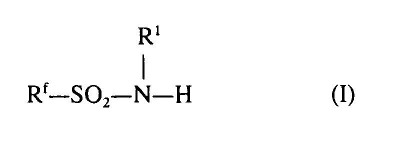 where
R^{f} represents a monovalent perfluoroalkyl group with 4 to 20 carbon atoms, and
R¹ represents hydrogen or a monovalent hydrocarbon chain with 1 to 20 carbon atoms, optionally interrupted by 1 to 4 oxygen atoms,
b) a component which contains oxyethylene units and which contains groups which react with 1,2-epoxides,
c) a component which contains 1,2-epoxide groups, and
d) optionally additional components which contain groups which react with 1,2-epoxides,
with the proviso that the amount of oxyethylene units present in the resin is 5 to 95 weight % of the total resin.

2. A resin which contains perfluoroalkyl groups and which is soluble, emulsifiable or dispersible in water according to claim 1, characterized in that the resin contains 5 to 95 weight % of oxyethylene units, 1.5 to 60 weight % of fluorine and optionally up to 200 milliequivalents of ionic groups per 100 g of resin.

3. A resin which contains perfluoroalkyl groups and which is soluble, emulsifiable or dispersible in water according to claim 1 or 2, characterized in that the equivalent ratio of the epoxide groups of component c) to the groups of components a), b) and optionally d) which react with epoxide is between 1 to 5 and 5 to 1.

4. A resin which contains perfluoroalkyl groups and which is soluble, emulsifiable or dispersible in water according to one or more of claims 1 to 3, characterized in that a polyoxyalkylene-modified polyester which comprises oxyethylene units and contains acidic groups is used as component b).

5. The use of the resins containing perfluoroalkyl groups which are soluble, emulsifiable or dispersible in water according to claims 1 to 4 as treatment-, protective- and impregnation media for mineral materials, textile materials, leather and paper, and as emulsifying, crosslinking and auxiliary processing agents for the production of aqueous preparations containing perfluoroalkyl compounds.

## Revendications

1. Résine hydrosoluble, émulsionnable ou dispersible dans l'eau contenant des groupes perfluoroalkyles qu'on peut préparer à partir de
a) sulfonamides présentant un ou plusieurs groupes perfluoroalkyles de formule générale (I) 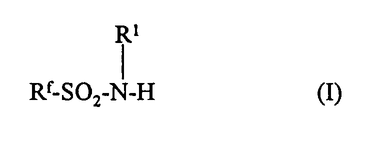 où
R^{f} représente un groupe perfluoroalkyle monovalent de 4 à 20 atomes de carbone et
R¹ représente un hydrogène ou une chaîne hydrocarbonée monovalente interrompue le cas échéant par 1 à 4 atomes d'oxygène avec 1 à 20 atomes de carbone,
b) un composant qui contient des motifs oxyéthylènes et présente des groupes réactifs vis-à-vis des 1,2-époxydes;
c) un composant, qui contient des groupes 1,2-époxydes et
d) le cas échéant d'autres composants, qui présentent des groupes réactifs vis-à-vis des 1,2-époxydes,
à la condition que la quantité des motifs oxyéthylènes présents dans la résine représentent 5 à 95 % en poids de l'ensemble de la résine.

2. Résine hydrosoluble, émulsionnable ou dispersible dans l'eau contenant des groupes perfluoralkyles selon la revendication 1, caractérisée en ce que la résine contient 5 à 95 % en poids de motifs oxyéthylènes, 1,5 à 60 % en poids de fluor et, le cas échéant, jusqu'à 200 méq./100 g de résine de groupes ioniques.

3. Résine hydrosoluble, émulsionnable ou dispersible dans l'eau contenant des groupes perfluoroalkyles selon la revendication 1 ou 2, caractérisée en ce que le rapport d'équivalent des groupes époxydes du composant c) aux groupes réactifs vis-à-vis de l'époxyde des composants a), b) et, le cas échéant, d) est compris entre 1 à 5 jusqu'à 5 à 1.

4. Résine hydrosoluble, émulsionnable ou dispersible dans l'eau contenant des groupes perfluoroalkyles selon une ou plusieurs des revendications 1 à 3, caractérisée en ce que le composant b) est un polyester présentant des motifs oxyéthylènes, modifié par des polyoxyalkylènes et contient des groupes acides.

5. Utilisation des résines hydrosolubles, émulsionnables et dispersibles dans l'eau contenant des groupes perfluoroalkyles selon la revendication 1 à 4 comme agent de traitement, de protection et d'imprégnation de matériaux de roches, de matériaux textiles, de cuir et de papier ainsi que comme produits émulsionnants, mouillants et adjuvants pour produire des préparations aqueuses contenant des composés perfluoroalkyles.
